# EUROPÄISCHE PATENTANMELDUNG

(11) **EP 1 876 627 A2**
(43) Veröffentlichungstag der Anmeldung: **09.01.2008**
(21) Anmeldenummer: 07012974.7
(22) Anmeldetag: 03.07.2007
(51) Int. Cl.: H01H 79/00, H01H 71/02

(54) **Schutzschalter-Kurzschließer-Kombination**

(30) Priorität: 04.07.2006 DE 102006030672
(71) Anmelder: Moeller GmbH, 53115 Bonn (DE)
(72) Erfinder: Böder, Franz, 53506 Ahrbrück (DE); Schumacher, Andreas, 53547 Dattenberg (DE); Friedrich, Volker, 56368 Roth (DE)

(57) **Zusammenfassung**

Die Erfindung betrifft einen Schutzschalter, bei dem mindestens auf der Lastseite (LS) auf den Stromanschluss-Schienen (12) Befestigungsmittel (32) angeordnet sind zum lösbaren Befestigen eines Kurzschließers (30) zur Herstellung eines Kurzschlusses zwischen den Stromschienen (12). Mit der Erfindung wird der Schutzschalter mit einer Ausstattung aufgerüstet, die eine Erleichterung des späteren Einsatzes eines Lichtbogenerfassungs- und Löschsystems darstellt. Der Schutzschalter (10) ist mindestens mit einem Erfassungssystem zur Erfassung eines Fehlerstroms (77) in mindestens einer Phase (L1, L2, L3) ausgestattet. Bei Auftreten eines Fehlerstroms (77) ist von dem Erfassungssystem ein Auslösesignal (S1) an den Kurzschließer (30) übermittelbar. Die gemäß der Erfindung vorgesehene Option des Einbaus eines Kurzschließers bedeutet, dass der Schutzschalter sowohl ohne als auch mit angeordnetem Kurzschließer vollgültig betrieben werden kann.

## Beschreibung

Die Erfindung betrifft einen elektrischen Schutzschalter, insbesondere einen Leistungsschalter für Niederspannung.

Das Abschaltvermögen und die Ausschaltzeit eines Leistungsschalters bei Auftreten eines Fehlerstroms, insbesondere bei Auftreten eines Überstroms, eines Kurzschlusses oder eines Störlichtbogens, hängen von verschiedenen Parametern ab. Der Ausschaltvorgang setzt sich zusammen aus der Auslösezeit, der Eigenzeit und der Ausschaltzeit. Die Auslösezeit ist die Zeit vom Eintreten der die Auslösung verursachenden Größe bis zum Einleiten des Auslösevorgangs, zum Beispiel dem Entklinken eines Schaltschlosses. Es schließt sich die Eigenzeit des Schalters an, die durch die dynamischen Vorgänge der sich bewegenden und öffnenden Kontakte des Schalters bedingt sind. Bei einem Schalter für den höheren Leistungsbereich (Nennstrom bis 6300 A) rechnet man mit einer Ausschaltzeit von etwa 30 bis 50 msec.

Im Falle des Auftretens eines Störlichtbogens in einer elektrischen Anlage können schwere Personen- und/oder Sachschäden entstehen, die es gilt, möglichst zu begrenzen. Zur Begrenzung solcher Schäden sind verschiedene Maßnahmen vorgeschlagen worden, von denen die Abschaltung (das Löschen) des Störlichtbogens in kürzerer Zeit als die Ausschaltzeit des Einspeiseschalters die optimale Lösung ist.

Bekanntermaßen werden Kurzschließer eingesetzt, um Störlichtbögen in elektrischen Anlagen abzuschalten. Für eine solche Anordnung zum Löschen eines Störlichtbogens sind unterschiedliche Erfassungssysteme für physikalische Effekte des brennenden Lichtbogens (Licht, Schall, Druck) einsetzbar. Ein erprobtes System beruht auf der optischen Erfassung eines Lichtbogens (EP 0575 932 B1). Zur Abschaltung des Lichtbogens werden unterschiedliche Kurzschließeranordnungen vorgeschlagen, beispielsweise der Einsatz eines pyrotechnisch angetriebenen Kurzschließers (EP 1052 665 B1 oder WO 200062320 A1); durch einen über Thyristoren zu schaltenden Kurzschluss (DE 4438593 A1) oder der Einsatz einer Vakuumschaltröhre (DE 4404074 A1). Mit solchen Kurzschließereinrichtungen wird ein Kurzschluss zwischen den Phasen des Netzes erzeugt, zwischen dem der Lichtbogen brennt, so dass der Störlichtbogen in kürzerer Zeit als 3 msec zum Erlöschen gebracht werden kann.

Nach Schalten des Kurzschließers fließt noch ein Kurzschluss-Strom, der von dem in Reihe geschalteten Einspeiseschalter (nach seiner Ausschaltzeit) abgeschaltet wird, wodurch die fehlerhafte elektrische Anlage letztendlich vom Netz getrennt wird.

Der Vorteil eines Lichtbogenerfassungs- und Löschsystems liegt auf der Hand. Allerdings ist der besondere Aufwand für die Installation eines optischen Lichtbogenerfassungssystems mit Lichtwellenleitern und entsprechender Opto-Elektronik ist nicht unerheblich. Bei manchen elektrischen Installationen wird daher aus wirtschaftlichen Gründen - trotz der offensichtlichen Vorzüge - auf den Einsatz eines Lichtbogenerfassungs- und Löschsystems verzichtet.

Der Erfindung liegt daher die Aufgabe zugrunde, einen Schutzschalter mit einer Ausstattung aufzurüsten, mit der der spätere Einsatz eines Lichtbogenerfassungs- und Löschsystems erleichtert wird.

Die Aufgabe wird erfindungsgemäß durch die kennzeichnenden Merkmale des unabhängigen Anspruchs gelöst, während den abhängigen Ansprüchen vorteilhafte Weiterbildungen der Erfindung zu entnehmen sind.

Der Kern der Erfindung ist, dass mindestens auf der Lastseite des Schutzschalter auf den Stromanschluss-Schienen Befestigungsmittel angeordnet sind zum lösbaren Befestigen eines Kurzschließers zur Herstellung eines Kurzschlusses zwischen den Stromschienen bei einem von einer Fehlerstrom-Erfassungseinheit erfassten Fehlerstrom. Die angesprochenen Befestigungsmittel können auch auf der Netzseite des Schutzschalters ausgebildet sein, so dass beim Einsatz des Schutzschalters entschieden werden kann, ob die Option des Einbaus eines Kurzschließers netzseitig oder lastseitig vorgenommen wird.

Mit der Erfindung wird dem Anwender des Schutzschalters eine Option auf eine erweitere Einsatzfunktion vermittelt.

Die Befestigungsmittel sollen zum einfachen, schnellen und lösbaren Befestigen geeignet sein. Beispielsweise kann ein Spannhebel-System verwendet werden, bei dem - ohne Verschrauben - der Kurzschließer mit festem Sitz auf den Stromanschluss-Schienen aufgespannt wird. Alternativ kann auch vorgesehen sein, dass auf den Anschluss-Stromschienen des Schutzschalters Gewindebolzen angeordnet sind, die mit Anschlusspunkten im Kurzschließer korrespondieren, wo beispielsweise Bohrungen vorhanden sind, die über die Gewindebolzen schiebbar sind. Die Befestigung erfolgt dann über Schrauben (evtl. mit Unterlegscheiben).

Es versteht sich, dass es von Vorzug ist, mit der Installation eines Kurzschließers ebenfalls ein Lichtbogenerfassungssystem in der elektrischen Anlage zu montieren. In einer 'vereinfachten' Ausführung kann jedoch die Erfassung eines Fehlerstroms allein auf den Einsatz eines Kurzschluss-Detektors (Stromwandler und Kurzschluss-Auslöser) im Schutzschalter beschränkt bleiben. Es dürfte dem Fachmann klar sein, dass diese Gestaltung nur die untere Stufe eines Sicherungssystems gegen Anlagenstörungen sein kann.

Der typische Einsatz eines Kurzschließers wird das Einbringen und Befestigen auf der Lastseite des Schutzschalters sein. Damit tritt der Kurzschließer zwischen Schutzschalter und der hinterliegenden elektrischen Anlage (beispielsweise Schalt- oder Verteilerstation, Trafostation, Elektromotor) und trennt die Anlage bei einer Kurzschluss-Schaltung vom Netz.

Allerdings kann ein Kurzschließer auch auf der Netzseite des Kurzschließers eingebracht werden. Für eine 'extensive Schutzsituation' können somit auch zwei Kurzschließer eingesetzt werden, einer vor und einer hinter dem Schutzschalter. Der Einsatz auf der Netzseite des Schutzschalters bringt den Vorteil mit sich, dass auch der gesamte Anschlussbereich (Trafo, Kabel, Schienen) 'vor dem Schutzschalter' in der Überwachungszone des Kurzschließers liegt. Beim Auftreten eines Störlichtbogens im Anschlussbereich löscht ein aktivierter Kurzschließer den Störlichtbogen und dem vorgelagerten, übergeordneten Einspeiseschutzschalter fällt die 'Aufgabe' zu, den vorhandenen Kurzschluss abzuschalten.

Die Anordnung lässt sich dahingehend erweitern, wenn im Anschlussbereich auch ein Erfassungsmittel für einen Störlichtbogen angeordnet ist. Wie erwähnt - kann ein solches Erfassungsmittel ein Lichtwellenleiter-Sensor oder eine oder mehrere Photodioden sein. Deren Erfassungssignal kann an einen oder an beide im Schutzschalter angeordnete Kurzschließer übermittelt werden.

Die die Erfassungsmittel umfassende Erfassungseinheit dient dem Erfassen mindestens eines von einem Störlichtbogen herrührenden physikalischen Effekts. Von Störlichtbögen gehen Licht-, Druck-, Schall- und magnetische Erscheinungen (und weitere) aus, die einzeln oder gemeinsam von den Erfassungsmitteln erfasst und an die Erfassungseinheit - zur Betätigung des Kurzschließers - übermittelt werden.

Die gemäß der Erfindung vorgesehene Option des Einbaus eines Kurzschließers bedeutet, dass der Schutzschalter sowohl ohne als auch mit angeordnetem Kurzschließer vollgültig betrieben werden kann.

Den Befestigungsmitteln kann ein Einführschacht zugeordnet sein, das heißt mit anderen Worten, dass der Befestigungsort als Schacht ausgebildet ist, in den ein Kurzschließer einführbar ist. Der Ort der Befestigung sollte jederzeit von außen zugänglich sein, jedoch sollte dieser Ort aus Sicherheitsgründen verschließbar ausgestaltet sein. Vorzugsweise kann die Befestigungsstelle mit einer Klappe oder mit einem Deckel verschließbar gestaltet werden. Zur Sicherung können auch Mittel zur Plombierung der Verschlussmittel für den Einführschacht vorgesehen sein. Das Einbringen eines Kurzschließers kann dann nur nach Zerstörung der Plombierung erfolgen.

Weiterhin wird vorgeschlagen, Mittel für die Plombierung eines in den Einführschacht eingebrachten Kurzschließers vorzusehen. Der eingeschobene Kurzschließer lässt sich somit gegen unbefugte Entnahme sichern.

Weitere vorteilhafte Ausführungen der Erfindungen werden wie folgt dargestellt:

Im Einführschacht sollten elektrische Kontaktmittel vorhanden sein, die zur Aufnahme von am Kurzschließer angeordneten elektrischen Gegenkontaktmittel geeignet sind. Über die Kontaktmittel ist der Kurzschließer vom Schutzschalter, bzw. von einem im Schutzschalter ausgebildeten elektronischen Modul ansteuerbar. Die elektrischen Kontaktmittel (beispielsweise Stecker und Buchsen) werden beim Einschieben des Kurzschließers in den Einführschacht automatisch gekuppelt.

Über die Kontaktmittel sind elektrische Leistungsdaten, Arbeitsgrößen, Einstellgrößen und/oder Auslösesignale zwischen Schutzschalter und Kurzschließer übermittelbar.

Der Schutzschalter kann eine Sperre gegen das Wiedereinschalten des Schutzschalters aufweisen, die nach Auslösen der Schaltfunktion im Kurzschließer in Funktion tritt.

Wie in der Einleitung angesprochen sind verschiedene Arten und Typen von Kurzschließern bekannt. Einen für den jeweiligen Zweck gut geeigneten Kurzschließer wird der Fachmann jeweils bestimmen und auswählen können. Vorzugsweise wird ein pyrotechnisch angetriebener Kurzschließer empfohlen. Zu dessen Antrieb kann ein Chemismus auf Nitrocellulose-Basis vorgesehen sein. Die Anschluss-Schienen im Kurzschließer bilden ein sandwichartiges Paket. Der pyrotechnische Antrieb treibt einen metallischen Bolzen durch den Stapel der Anschluss-Schienen, so dass die Phasen innerhalb von weniger als 1 msec untereinander mechanisch kontaktiert werden und ein Kurzschluss erzeugt wird. In einer Situation, wo der Kurzschluss als brennender Störlichtbogen vorliegt, wird dem Lichtbogen die Energie entzogen und dieser erlischt.

Der Kurzschließer sollte mindestens zwei Phasen des Stromanschlusses kurzschließen. Es wird in Fachkreisen auch diskutiert, den Kurzschließer zur Kontaktierung mindestens einer Phase des Stromanschlusses mit Masse einzurichten (eingerichtet zum Schalten auf PE). Beide Ausgestaltungen sind einsetzbar.

Der Schutzschalter ist - wie üblich - mit einer Erfassungselektronik zur Erfassung eines Fehlerstroms auf der Lastseite in mindestens einer Phase ausgestattet. Hierzu kann ein Stromwandler vorhanden sein, der zum Erfassen eines lastseitigen Fehlerstroms in einer der Phasen geschaffen ist. Bei Überschreiten einer vorgegebenen Schwelle von Stromsteilheit und/oder Stromstärke wird ein entsprechendes Signal über die Kontakte am Befestigungsort zur Aktivierung des Kurzschließers übermittelt. Ein eingebauter Kurzschließer würde dann einen Kurzschluss erzeugen.

Der Betriebszustand des Kurzschließers wird von einem Energiespeicher (beispielsweise von einer Kondensatorbatterie) aufrecht gehalten, dessen gespeicherte Energie zur Betätigung (Zündung) des Kurzschließerantriebs ausreicht. Die Ladung des Energiespeichers sollte permanent vorhanden sein. Daher ist von Vorteil, wenn für den Energiespeicher eine permanente Stromversorgung vorhanden ist. Diese sollte unabhängig vom Netz sein, an welchem die elektrische Anlage und der Schutzschalter liegen. Die Stromversorgung kann batteriegestützt ausgebildet sein oder aus einer Versorgung aus einem parallelen elektrischen Netz. Bei einer batteriegestützten Variante muss Sorge dafür getragen werden, dass die Batterie immer den vollen Ladezustand hat, was am einfachsten mittels automatischer Ladeüberwachung machbar ist.

Solange der Kurzschluss im Kurzschließer besteht, sollte das Wiedereinschalten des Schutzschalters unterbunden bleiben. Erst wenn der Kurzschluss aufgehoben ist, was durch Austausch des Kurzschließers gegen einen funktionstüchtigen Kurzschließer oder durch Erneuerung funktionsuntüchtiger Teile oder auch durch Nichtersatz erfolgen kann, soll ein Wiedereinschalten möglich sein. Damit wird ein hoher Anlagen- und auch Personenschutz erreicht.

Der Einsatz des Schutzschalters ist praktisch in allen in gängigen Schaltschränken von elektrischen Anlagen möglich. Die Montage und Inbetriebnahme des Kurzschließers im Schutzschalter ist schnell und einfach vorzunehmen. Es entsteht eine kompakt aufgebaute Einheit. Ein zusätzlicher Platzbedarf besteht nicht. Aus solchen Gründen kann der Schutzschalter auch gegen vorhandene Schaltsysteme in einem Nachrüstvorgang ausgewechselt werden.

Die Leiter und Stromschienen von Schutzschalter und Kurzschließer sollten für einen Kurzschluss-Strom von über 100 kA über einen Zeitraum bis zu 500 ms ausgelegt sein. Mit dieser Vorgabe ist es unter bestimmten Ausgestaltungen der elektrischen Anlage möglich, die Kriterien für die Kurzschlussfestigkeit der elektrischen Anlage abzuschwächen. Bisher ging man davon aus, dass Stromschienen, Schienenstützer und weitere stromführende Teile einer elektrischen Anlage für einen maximal zu erwartenden Kurzschluss-Strom ertüchtigt sein sollten. Bei der Nutzung der durch die Erfindung vorgeschlagenen Option des Einsatzes eines Kurzschließers schaltet der Kurzschließer die elektrische Anlage innerhalb von 2 msec ab. Die Kurzschlussbelastung der Anlage wird somit minimiert. Eine sonst vorhandene Anforderung an eine elektrische Anlage nach maximaler Kurzschlussfestigkeit muss somit nicht mehr voll erfüllt werden. Dies hat selbstverständlich für den Anlagenbetreiber wirtschaftliche Vorteile.

Weitere Einzelheiten und Vorteile der Erfindung ergeben sich aus dem folgenden, anhand den Figuren erläuterten Ausführungsbeispielen. Es zeigen
- Figur 1 A und 1B:: eine perspektivische Darstellung von Schutzschalter und Kurzschließer,
- Figur 2:: ein Schutzschalter mit zwei schematisch dargestellten Kompartments und
- Figur 3:: eine schematische Schaltungsanordnung einer Kurzschließer-Schutzschalter-Kombination.

Die Darstellungen in den Figuren zeigen einen als Leistungsschalter 10 ausgebildeten Schutzschalter, der vor einem elektrischen Verbraucher 40 in einem dreiphasigen (L1, L2, L3) Netz liegt. Der Schutzschalter weist eine Erfassungseinheit (Kurzschlussauslöser) und einen Überlastauslöser auf, der als Bimetall-Auslöser ausgebildet sein kann. Überlastauslöser arbeiten zeitverzögert bei Auftreten einer hohen, voreinstellbaren Stromstärke und veranlassen das Öffnen der Kontakte des Schutzschalters über das Schaltschloss 16. Die vorgesehene Erfassungseinheit 20 ist als elektronische Einheit vorhanden, die von Stromerfassungsmitteln 21 angesteuert wird. Als Stromerfassungsmitteln können Stromwandler, beispielsweise Hallsensoren vorgesehen sein.

Der Schutzschalter ist so ausgebildet, dass an mindestens einer Befestigungsstelle ein Kurzschließer anschließbar ist.

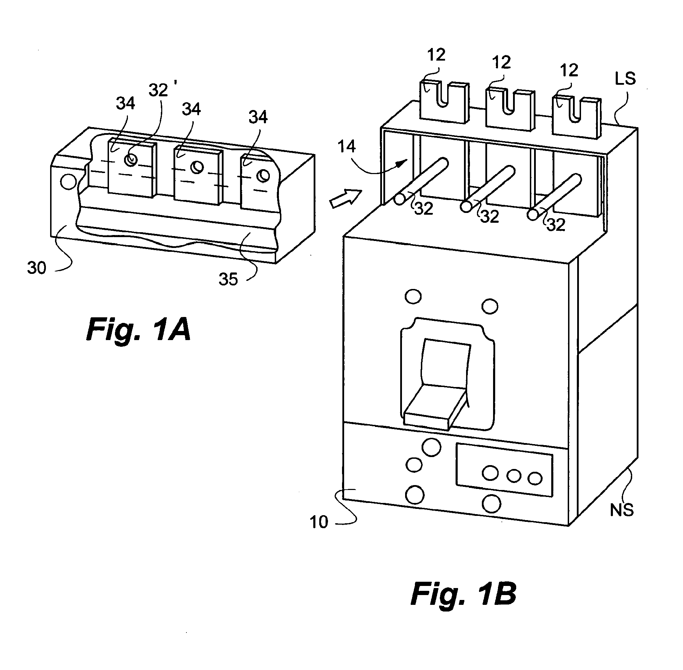

Hierzu sind - gemäß Fig. 1 B - auf der Lastseite LS des Schutzschalters die Stromschienen 12 jeder Phase L1, L2, L3 zugänglich und dort mit Mitteln 32 (hier Gewindebolzen) zum lösbaren Einbau (Kontaktieren, Befestigen, Verbinden, Verschrauben) des Kurzschließers 30 versehen. Der Kurzschließer 30 ist zur elektrischen Verschaltung der drei Phasen (L1, L2, L3) untereinander geeignet. Mit ihm lassen sich die Stromschienen 12 untereinander kurzschließen.

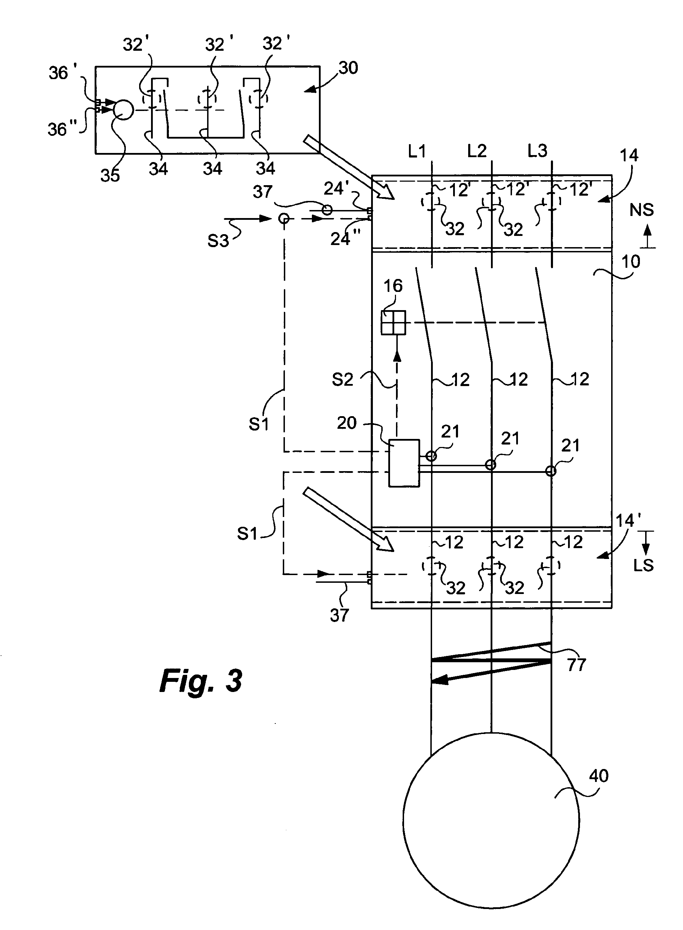

In der Anordnung gemäß Fig. 1 wird der Schutzschalter von unten (netzseitig) eingespeist; in Fig. 3 ist demgegenüber die Einspeiseseite (schematisch) obenliegendangedeutet.

Als Befestigungsstelle für einen Kurzschließer ist ein Einführschacht 14 vorhanden. Das Gehäuse des Schutzschalters ist - gemäß Figurendarstellung - mit integriertem Einführschacht ausgebildet. Das Gehäuse des Kurzschließers ist vom Design und der Geometrie her, dem Gehäuse des Schutzschalters, bzw. dem Einführschacht angepasst. Eine plombierbare Kappe zur Abdeckung eines Einführschachts - bei nicht eingesetztem Kurzschließer - sollte vorhanden sein.

Es kann auch - in einer weiteren Ausführungsform - auf eine gesonderte Gehäuseausbildung verzichtet werden, wenn nur vorgesehen ist, dass ein Kurzschließer 30 auf den Stromanschlußschienen des Schutzschalters befestigbar (anflanschbar) ist. Das Gehäuse des Schutzschalters muss nicht notwendig mit integriertem Einführschacht ausgebildet sein.

Die Möglichkeit des Einführens und Einbauens eines Kurzschließers wird mit Pfeilen in den Figuren angedeutet.

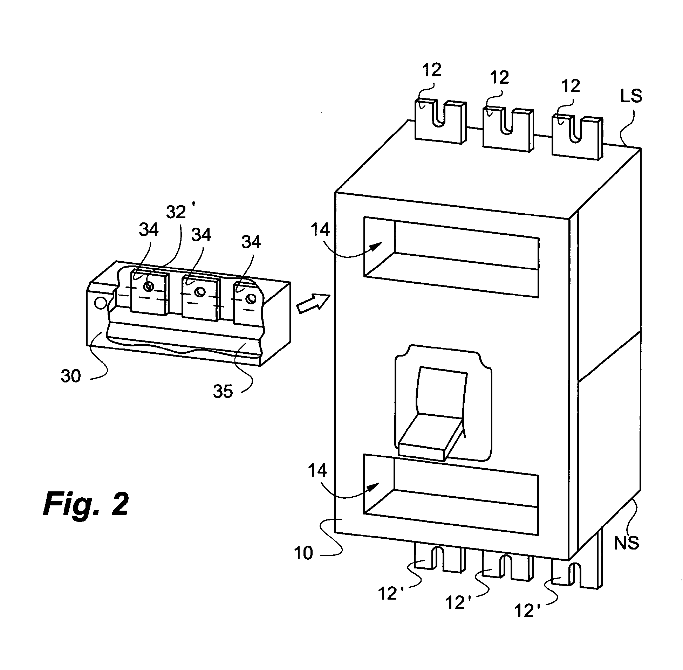

Vorzugsweise können auch zwei Einführschächte 14, 14' ausgebildet sein, wie das in Figur 2 oben und unten angedeutet ist. Ein Kurzschließer 30 kann somit auf der Netzseite NS des Schutzschalters oder auf der Lastseite LS des Schutzschalters eingebaut werden. Es ist zu beachten, dass in den Figuren 1 und 2 die Lastseite LS oben und in Fig. 3 die Lastseite LS unten liegt.

In Fig. 1A ist im Kurzschließer ein pyrotechnischer Generator mit Bezugszeichen 35 angedeutet. Die Anschluss-Schienen 34 des Kurzschließers 30, in denen Bohrungen 32' vorhanden sind, werden an den Befestigungsstellen mit den Stromschienen 12, 12' kontaktiert und somit parallel geschaltet. Die 'normale' Funktion des Schutzschalters ist unabhängig davon, ob ein Kurzschließer 30 eingebaut ist oder nicht. Der Kurzschließer 30 wird bei Auftreten eines Fehlerstroms, vornehmlich bei einem Kurzschluss in der elektrischen Anlage 40 ausgelöst.

Die Fig. 2 zeigt eine perspektivische Darstellung mit zwei schematisch dargestellten Kompartments 14' sowohl auf der Lastseite LS (oben) als auch (14) auf der Netzseite NS (unten), wo Befestigungsmittel zum Einbau des Kurzschließers 35 vorhanden sein können.

Das Schaltbild des Schutzschalters ist schematisch in Fig. 3 dargestellt.

Ein Kurzschluss wird von der elektronischen Erfassungseinheit 20 des Leistungsschalters (Kurzschlussauslöser), jedoch nicht von dem Überlastauslöser detektiert. Der Kern der Erfassungseinheit 20 ist ein Stromwandler 21. Als Kurzschlussauslöser wird in mechanischen Schaltgeräten üblicherweise ein magnetischer Aktor eingesetzt, der vom Strom durchflossen wird und im Kurzschlussfall durch die hierdurch hervorgerufenen magnetischen Kräfte mechanisch eine Entklinkung des Schaltschlosses und damit eine Abschaltung des Schutzschalters bewirkt.

Die Erfassungseinheit wird auf vorgegebene Werte (Schwelle) von Stromsteilheit und Stromstärke eingestellt. Bei Überschreiten einer vorgegebenen Schwelle, beispielsweise bei Auftreten eines Störlichtbogens 77 sendet die Erfassungseinheit 20 ein Signal (S1, S2) sowohl an den Kurzschließer 30 als auch an das Schaltschloss mit einem 'Befehl' S2 zum Öffnen der Kontakte des Schutzschalters 10.

Parallel zum elektronischen Auslösesignal S1 an den Schalter erhält das Schaltschloss 16 des Schutzschalters den 'Befehl' S2 zum Öffnen der Kontakte. Es läuft nunmehr die Ausschaltzeit des Schutzschalters, an deren Ende der den Kurzschluss führende Kurzschließer (und dahinter auch die elektrische Anlage 40) vom Netz getrennt ist.

Im Einführschacht sind elektrische Kontaktmittel 24', 24" vorhanden, die zur Aufnahme von am Kurzschließer angeordneten elektrischen Gegenkontaktmittel 36', 36" geeignet sind. Die elektrischen Kontaktmittel (beispielsweise Stecker und Buchsen) werden beim Einschieben des Kurzschließers in den Einführschacht automatisch gekuppelt.

Nach einem Schaltvorgang des Kurzschließers 30 ist vorgesehen, eine Sperre gegen Wiedereinschalten des Schutzschalters in Funktion zu setzen. Die Sperrfunktion kann mechanisch oder elektromechanisch ausgebildet sein.

Zur Wiederinbetriebnahme der elektrischen Anlage sollte der Kurzschließer durch einen neuen funktionstüchtigen Kurzschließer ausgetauscht werden Hierbei wird auch die Sperrfunktion aufgehoben. Der Schutzschalter ist für das mehrfache Schalten eines Kurzschluss-Stroms ausgerüstet, so dass dieser bei mehrfachem Auftreten eines Fehlerstroms weiter betrieben werden kann.

Nicht näher dargestellt ist eine Erfassungseinheit für einen Störlichtbogen. Auf ein solches Erfassungssystem wurde einleitend schon verwiesen (EP 0575 932 B1). Hierbei wird eine optische Einheit mit Lichtwellenleitern verwendet, welche mit einer parallelen Stromerfassung (beispielsweise über Hall-Sensoren) gekoppelt ist. Beim Auftreten des Lichtblitzes des Störlichtbogens und mit dem schnellen Anstieg des vom Lichtbogen herrührenden Fehlerstroms wird ein Schaltsignal S3 von der Störlichtbogenerfassungseinheit an den Kurzschließer gegeben, der damit zur Aktion veranlasst wird.

Bezugszeichen, soweit nicht zuvor schon angesprochen
10 Leistungsschalter
12 lastseitige Stromanschluss-Schienen
12' netzseitige Stromanschluss-Schienen
14 14' Einführschacht; Kompartment
16 Schaltschloss
20 Elektronikauslöser
21 Stromerfassung (Stromwandler)
24' 24" Stecker
30 Kurzschließer
32, 32' Befestigungsstellen (Gewindebolzen; Muttern)
34 Anschluss-Schienen
35 pyrotechnischer Generator
36' 36" Stecker
37 Energieversorgung extern oder Batterie
40 Verbraucher, elektr. Anlage
77 Störlichtbogen
S1 Auslösesignal bei Kurzschluss oder Lichtbogen an Kurzschließer
S2 Auslösesignal an Leistungsschalter
S3 Signal von Stromerfassung auf der Netzseite
L1 L2 L3 Stromphasen
NS Netzseite
LS Lastseite

## Patentansprüche

1. Schutzschalter, insbesondere mehrphasiger Leistungsschalter für Niederspannung mit einem Öffnungs-Schließ-Apparat (16) für jede Phase (L1, L2, L3) und mindestens einer Erfassungseinheit (20) für einen Fehlerstrom (77) in mindestens einer Phase (L1, L2, L3) einer zu schützenden elektrischen Anlage (40),
**dadurch gekennzeichnet, dass** mindestens auf der Lastseite (LS) des Schutzschalters (10) auf den Stromanschluss-Schienen (12) Befestigungsmittel (32) angeordnet sind zum lösbaren Befestigen eines Kurzschließers (30), mit dem bei einem von der Erfassungseinheit (20) erfassten Fehlerstrom (77) ein Kurzschluss zwischen den Stromanschluss-Schienen (12) herstellbar ist.

2. Schutzschalter nach Anspruch 1, **dadurch gekennzeichnet, dass** der Kurzschließer (30) als pyrotechnisch angetriebener Kurzschließer ausgebildet ist.

3. Schutzschalter nach Anspruch 1 oder 2, **dadurch gekennzeichnet, dass** die Befestigungsmittel (32) auch auf Stromanschluss-Schienen (12') auf der Netzseite (NS) des Schutzschalters (10) ausgebildet sind.

4. Schutzschalter nach einem der vorhergehenden Ansprüche, **dadurch gekennzeichnet, dass** den Befestigungsmitteln (32) ein Einführschacht (14, 14') zum Einführen eines Kurzschließers (30) zugeordnet ist.

5. Schutzschalter nach Anspruch 4, **dadurch gekennzeichnet, dass** im Einführschacht (14, 14') elektrische Kontaktmittel (24', 24") vorhanden sind, die zur Aufnahme von am Kurzschließer angeordneten elektrischen Gegenkontaktmittel (36', 36") geeignet sind.

6. Schutzschalter nach Anspruch 4 oder 5, **dadurch gekennzeichnet, dass** der Einführschacht (14, 14') verschließbar gestaltet ist.

7. Schutzschalter nach Anspruch 6, **dadurch gekennzeichnet, dass** über die Kontaktmittel (24', 24") elektrische Leistungs- und Arbeitsgrößen zwischen Schutzschalter (10) und Kurzschließer (30) übermittelbar sind.

8. Schutzschalter nach einem der vorhergehenden Ansprüche, **dadurch gekennzeichnet, dass** der Schutzschalter eine Sperre gegen das Wiedereinschalten des Schutzschalters (10) aufweist, die nach Auslösen der Schaltfunktion im Kurzschließer (30) in Funktion tritt.

9. Schutzschalter nach einem der vorhergehenden Ansprüche, **dadurch gekennzeichnet, dass** eine Erfassungseinheit für einen Fehlerstrom (77) zusätzlich netzseitig im Anschlussbereich des Schutzschalters angeordnet ist.

10. Schutzschalter nach dem vorhergehenden Anspruch, **dadurch gekennzeichnet, dass** die Erfassungseinheit für das Erfassen mindestens eines von einem Störlichtbogen herrührenden physikalischen Effekts ausgebildet ist.
